# EUROPÄISCHE PATENTSCHRIFT

(11) **EP 1 966 480 B1**
(45) Veröffentlichungstag und Bekanntmachung des Hinweises auf die Patenterteilung: **04.08.2010**
(21) Anmeldenummer: 06807613.2
(22) Anmeldetag: 27.10.2006
(51) Int. Cl.: F02M 55/00, F02M 61/16, F16L 19/02

(54) **HOCHDRUCKVERBINDUNG UND VERFAHREN ZUM HERSTELLEN EINER HOCHDRUCKVERBINDUNG**
HIGH-PRESSURE CONNECTION AND METHOD FOR PRODUCING A HIGH-PRESSURE CONNECTION
CONNEXION HAUTE PRESSION ET PROCEDE POUR CREER UNE CONNEXION HAUTE PRESSION

(30) Priorität: 19.12.2005 DE 102005060667
(43) Veröffentlichungstag der Anmeldung: 10.09.2008
(73) Patentinhaber: ROBERT BOSCH GMBH, 70442 Stuttgart (DE)
(72) Erfinder: GLOCK, Armin, 73660 Urbach (DE); HACKENBERG, Juergen, 74343 Sachsenheim (DE)
(86) Internationale Anmeldenummer: PCT/EP2006/067863
(87) Internationale Veröffentlichungsnummer: WO 2007/071481

(56) Entgegenhaltungen:
- EP-A2- 1 245 826
- EP-A2- 1 350 946
- WO-A-2005/054522
- GB-A- 863 390

## Beschreibung

Die Erfindung betrifft eine Hochdruckverbindung mit zwei aneinander anliegenden Dichtflächen. Die Erfindung betrifft auch ein Verfahren zum Herstellen einer derartigen Hochdruckverbindung (EP-A-1245826).

### Stand der Technik

Die Dichtigkeit von Hochdruckverbindungen kann dadurch verbessert werden, dass nicht dichtungsrelevante Bereiche durch Fräsen abgesenkt werden, um die lokale Flächenpressung zu erhöhen. Darüber hinaus ist die Verwendung von O-Ringen bekannt, die aus einem beschichteten metallischen Werkstoff gebildet sind.

Aufgabe der Erfindung ist es, die Dichtigkeit von Hochdruckverbindungen zu verbessern.

### Vorteile der Erfindung

Die Aufgabe ist bei einer Hochdruckverbindung mit zwei aneinander anliegenden Dichtflächen dadurch gelöst, dass mindestens eine der Dichtflächen mit einer partiellen Beschichtung versehen ist. Durch die partielle Beschichtung wird eine komponentenspezifische Dichtung geschaffen, die für hohe Drücke geeignet ist. Partiell bedeutet im Zusammenhang mit der vorliegenden Erfindung, dass nicht die komplette Dichtfläche beschichtet ist, sondern nur ein Teil der Dichtfläche. Dadurch wird auf der Dichtfläche eine Dichtstruktur geschaffen.

Die Erfindung ist **dadurch gekennzeichnet, dass** die partielle Beschichtung mehrere unterschiedliche Materialien enthält. Die unterschiedlichen Materialien können über- und/oder nebeneinander angeordnet sein.

Die oben angegebene Aufgabe ist bei einem Verfahren zum Herstellen einer vorab beschriebenen Hochdruckverbindung mit zwei aneinander anliegenden Dichtflächen dadurch gelöst, dass die partielle Beschichtung durch elektrochemische Metallabscheidung erzeugt wird. Bei einer vorzugsweisen Verwendung des Galvanoformens erfolgt eine elektrochemische Metallabscheidung partiell nur in definierten Bereichen der Dichtfläche. Das abzuscheidende Material ist auf die Dichtfunktion und den Grundwerkstoff der Dichtfläche abgestimmt.

Ein bevorzugtes Ausführungsbeispiel des Verfahrens ist **dadurch gekennzeichnet, dass** die seitlichen Abmessungen der partiellen Beschichtung durch Photolithographie mit einer Fotomaske erzeugt werden. Durch Photolithographie werden die Bereiche definiert, in denen die elektrochemische Metallabscheidung durch Galvanoformen erfolgt. Es wird zwischen einem so genannten Positivresist und einem so genannten Negativresist unterschieden. Bei einem Negativresist wird ein Resist an den Stellen vernetzt, die vorzugsweise mit UV-Licht beaufschlagt werden. Dadurch wird der Resist an diesen Stellen in einem anschließenden Entwicklungsprozess unlöslich. Bei dem Positivresist wird der Resist an den Stellen, die vorzugsweise mit UV-Licht beaufschlagt werden, "zerstört". Im anschließenden Entwicklungsprozess wird der Resist an diesen Stellen "herausgewaschen". Im Rahmen der vorliegenden Erfindung werden vorzugsweise Negativresiste in Form von Folienresisten verwendet.

Ein weiteres bevorzugtes Ausführungsbeispiel des Verfahrens ist **dadurch gekennzeichnet, dass** die seitlichen Abmessungen der partiellen Beschichtung durch Laserstrahlung definiert werden. Die Laserstrahlung ermöglicht auf einfache Art und Weise eine partielle Beschichtung der Dichtfläche. Dabei kann die Laserstrahlung zur Belichtung des Fotoresists verwendet werden. Die Laserstrahlung kann aber auch zum gezielten Abtragen eines Maskierungsmaterials verwendet werden.

Ein weiteres bevorzugtes Ausführungsbeispiel des Verfahrens ist **dadurch gekennzeichnet, dass** ein Fotoresist vorkonfektioniert wird, um eine Zielgeometrie zu erzeugen. Beim Vorkonfektionieren wird die Zielgeometrie durch Stanzen, Schneiden oder Laserbearbeitung in den Fotoresist eingearbeitet. Dabei wird ein Fotoresist in Folienform verwendet, wie er zum Beispiel in der Leiterplattenfertigung eingesetzt wird. Der Fotoresist in Folienform ist zum Beispiel 30 cm breit und über 100 m lang. Vorkonfektionieren heißt im Rahmen der vorliegenden Erfindung, dass die Größe des Resists auf die zu bearbeitende Fläche angepasst wird.

Ein weiteres bevorzugtes Ausführungsbeispiel des Verfahrens ist **dadurch gekennzeichnet, dass** der vorkonfektionierte Fotoresist auf die Dichtfläche aufgebracht wird. Vorzugsweise wird ein Folienresist mit einer Trägerfolie verwendet. Es ist aber auch möglich, einen Flüssigresist zu verwenden.

Ein weiteres bevorzugtes Ausführungsbeispiel des Verfahrens ist **dadurch gekennzeichnet, dass** der auf die Dichtfläche aufgebrachte Fotoresist fotostrukturiert wird, um die seitlichen Abmessungen der partiellen Beschichtung zu definieren. Das Fotostrukturieren erfolgt vorzugsweise durch die Maske und einen Belichter. Das Fotostrukturieren kann aber auch durch die gezielte Einwirkung von Laserstrahlen erfolgen.

Ein weiteres bevorzugtes Ausführungsbeispiel des Verfahrens ist **dadurch gekennzeichnet, dass** die Funktion einer durch die partielle Beschichtung gebildeten Dichtung durch Material und Form der partiellen Beschichtung eingestellt wird. Dabei wird zum Beispiel ein relativ weiches Material zur Anpassung an eine vorgegebene Rauigkeit der Dichtfläche oder zum Ausgleich von Unebenheiten einer Gegenfläche verwendet. Ein relativ hartes Material kann verwendet werden, um eine Funktion einer Beißkante darzustellen, die in die Gegenfläche gedrückt wird. Durch mehrlagige Verfahren mit unterschiedlichen Materialkombinationen können die Eigenschaften und die Funktion der Dichtung nahezu beliebig erweitert werden.

### Zeichnung

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: eine Dichtfläche einer herkömmlichen Hochdruckverbindung und
- Figur 2: eine Dichtfläche einer erfindungsgemäßen Hochdruckverbindung.

### Beschreibung der Ausführungsbeispiele

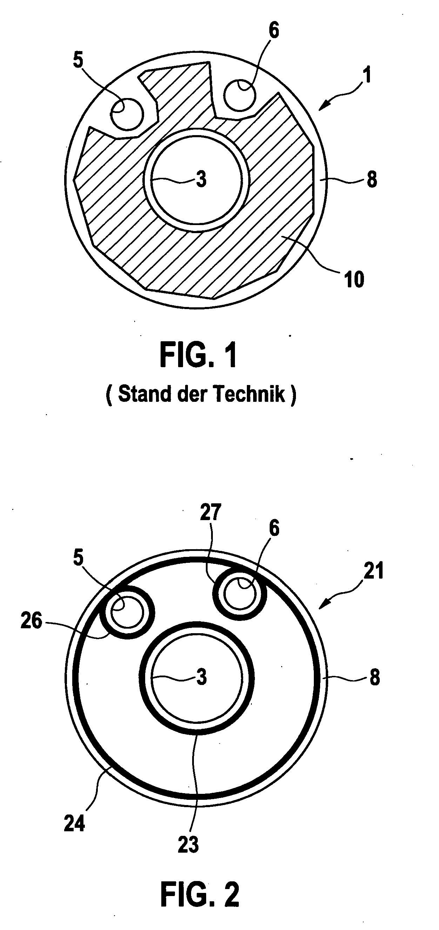

In Figur 1 ist ein im Wesentlichen kreiszylinderförmiger Kraftstoffinjektorkörper 1 in der Draufsicht dargestellt. Der Kraftstoffinjektorkörper 1 umfasst eine zentrale Niederdruckbohrung 3 sowie eine Hochdruckbohrung 5 und eine weitere Niederdruckbohrung 6, die radial außerhalb der zentralen Niederdruckbohrung 3 angeordnet sind. Die Bohrungen 3, 5 und 6 münden in eine gemeinsame Dichtfläche 8. Die Dichtfläche 8 des Kraftstoffinjektorkörpers 1 kommt im zusammengebauten Zustand an einer weiteren Dichtfläche eines (nicht dargestellten) weiteren Teils einer Kraftstoffinjektors zur Anlage. Im zusammengebauten Zustand werden die beiden Dichtflächen fest gegeneinander verspannt, um eine druckdichte Verbindung zwischen den Bohrungen 3, 5 und 6 und weiteren Bohrungen in dem weiteren Kraftstoffinjektorteil zu schaffen, die fluchtend zu den Bohrungen 3, 5 und 6 verlaufen.

In Figur 1 ist durch einen schraffierten Bereich 10 angedeutet, dass zwischen den Bohrungen 3, 5 und 6 vorhandene nicht dichtungsrelevante Bereiche abgesenkt sind. Durch das Absenken der.nicht dichtungsrelevanten Bereiche 10 wird die lokale Flächenpressung erhöht. Das Absenken der nicht dichtungsrelevanten Bereiche 10 kann durch Fräsen erfolgen. Das Fräsen ist jedoch relativ aufwendig und teuer. Außerdem sind die durch Fräsen darstellbaren Strukturen durch das Fräswerkzeug begrenzt.

In Figur 2 ist ein ähnlicher Kraftstoffinjektorkörper 21 wie in Figur 1 dargestellt. Der Kraftstoffinjektorkörper 21 umfasst eine zentrale Niederdruckbohrung 3 und eine Hochdruckbohrung 5 und eine weitere Niederdruckbohrung 6. Die Bohrungen 3 und 5, 6 münden in eine Dichtfläche 8, die die Gestalt einer Kreisfläche aufweist.

Im Unterschied zu dem in Figur 1 dargestellten Kraftstoffinjektorkörper 1 sind bei dem in Figur 2 dargestellten Kraftstoffinjektorkörper 21 dichtungsrelevante Bereiche 23, 24 und 26, 27 erhöht. Der dichtungsrelevante Bereich 23 hat die Gestalt einer Kreisringscheibe, welche die Mündung der Hochdruckbohrung 3 in die Dichtfläche 8 umgibt. Der dichtungsrelevante Bereich 24 hat die Gestalt einer Kreisringscheibe, die konzentrisch zu der Hochdruckbohrung 3 und dem dichtungsrelevanten Bereich 23 in der Nähe des äußeren Umfangsrandes der Dichtfläche 8 angeordnet ist. Die dichtungsrelevanten Bereiche 26 und 27 haben jeweils die Gestalt einer Kreisringscheibe, welche die zugehörige Mündung der Hochdruckbohrungen 5, 6 in die Dichtfläche 8 umgeben.

Gemäß einem wesentlichen Aspekt der vorliegenden Erfindung sind die dichtungsrelevanten Bereiche 23, 24 und 26, 27 erhaben zu der Dichtfläche 8 ausgebildet. Das Erhöhen der dichtungsrelevanten Bereiche 23, 24 und 26, 27 erfolgt durch partielles Beschichten mittels Galvanoformens. Beim erfindungsgemäßen Galvanoformen handelt es sich um eine Kombination von Fotolithographie und elektrochemische Metallabscheidung. Das abzuscheidende Material ist auf die Dichtfunktion und den Grundwerkstoff des Kraftstoffinjektorkörpers 21 abgestimmt. Das Materialspektrum kann von weich, zum Beispiel Indium, bis hart, zum Beispiel durch eine Nickel-Wolfram-Legierung, eingestellt werden.

Es können auch mehrere unterschiedliche Materialien nebeneinander oder übereinander kombiniert werden. Dadurch erhält man große Freiheitsgrade bezüglich der zu realisierenden Dichtungsgeometrie. Darüber hinaus ermöglicht der Lithographieprozess eine sehr hohe Präzision. Dadurch kann die Dichtung optimal an das mit der Dichtung zu versehende Bauteil angepasst werden. Die Geometrie der Dichtung wird lateral durch eine Fotomaske oder durch eine gezielte Laserdirektstrukturierung definiert. Die Höhe der Dichtung kann durch Galvanoformen frei bestimmt werden. Dabei sind Dichtungshöhen von 0,5 µm bis mehrere 100 µm möglich. Die zu verwendende Resisthöhe und die Galvanikhöhe sind aufeinander abzustimmen. Durch hohe Abscheidegeschwindigkeiten, die mit hohen Stromdichten verbunden sind, können auch dickere Schichten schnell hergestellt werden.

Gemäß einem Aspekt der vorliegenden Erfindung wird ein vorkonfektionierter Fotoresist mit anschließender Fotostrukturierung verwendet. Dabei wird vorzugsweise ein Folienresist verwendet, bei dem die Zielgeometrie beim Vorkonfektionieren durch Stanzen oder Schneider oder Laserbearbeitung eingearbeitet wird. Der Resist verbleibt dabei auf seiner Trägerfolie oder wird nach dem Konfektionieren wieder auf diese aufgebracht. Im Rahmen der vorliegenden Erfindung haben sich Fotoresiste in Folienform als vorteilhaft erwiesen, wie sie zum Beispiel in der Leitplattenfertigung eingesetzt werden. Ein solcher Fotoresist ist vorzugsweise 30 cm breit und über 100 m lang. Vorkonfektionieren heißt in diesem Zusammenhang, dass die Größe des Resists an die zu bearbeitende Fläche angepasst wird. Ein vorkonfektionierter Resist ähnelt einer Rolle mit runden "Klebeetiketten". Diese Klebeetiketten passen genau auf die gesamte Dichtfläche 8 in Figur 2. Nach dem Aufbringen der "Klebeetiketten" folgt die Fotostrukturierung des Resists.

Die spezifische Dichtstruktur (23, 24, 26, 27 in Figur 2) wird direkt auf der Dichtfläche des Bauteils durch Galvanoformung erzeugt. Das erfindungsgemäße Verfahren zum Herstellen der Dichtung läuft wie folgt ab. Zunächst wird die Dichtfläche (8 in Figur 2) vorbehandelt, insbesondere entfettet. Anschließend wird ein vorkonfektionierter, an die Bauteilgeometrie angepasster Folienresist auf die Dichtfläche aufgebracht. Das Aufbringen des Folienresists erfolgt unter einem vorbestimmten Druck und mit einer definierten Temperatur. Anstelle eines Folienresists kann auch ein Flüssigresist aufgebracht werden.

In einem weiteren Verfahrensschritt erfolgt die Fotostrukturierung des Resists. Vorzugsweise erfolgt die Fotostrukturierung durch eine entsprechende Maske mit Hilfe einer Belichtungseinrichtung. Die Fotostrukturierung kann aber auch direkt mit Hilfe einer Lasereinrichtung aufgebracht werden. Anschließend werden die nicht belichteten Bereiche entwickelt, das heißt der Resist wird partiell entfernt. Daraufhin werden die in dem vorherigen Schritt freigelegten Bereiche mit einer Beschichtung versehen. Schließlich wird der übrige Resist entfernt. Als Dichtungsmaterial wird zum Beispiel Indium verwendet. Beim Verschrauben von zwei Baugruppen fließt das Dichtungsmaterial, wobei Rauigkeiten und geringste Formabweichungen verschlossen werden. Dabei sollte ein definierter Abstand zu den Bohrungen und Außenkanten eingehalten werden.

## Patentansprüche

1. Hochdruckverbindung mit zwei aneinander anliegenden Dichtflächen (8), wobei mindestens eine der Dichtflächen (8) mit einer partiellen Beschichtung (23,24,26,27) versehen ist, **dadurch gekennzeichnet, dass** die partielle Beschichtung (23,24,26,27) mehrere unterschiedliche Materialien enthält.

2. Hochdruckverbindung nach Anspruch 1, **dadurch gekennzeichnet, dass** die unterschiedlichen Materialien übereinander und/oder nebeneinander aufgebracht sind.

3. Verfahren zum Herstellen einer Hochdruckverbindung mit zwei aneinander anliegenden Dichtflächen (8) nach einem der vorhergehenden Ansprüche, **dadurch gekennzeichnet, dass** die partielle Beschichtung (23,24,26,27) durch elektrochemische Metallabscheidung erzeugt wird.

4. Verfahren nach Anspruch 3, **dadurch gekennzeichnet, dass** die seitlichen Abmessungen der partiellen Beschichtung (23,24,26,27) durch Photolithographie mit einer Fotomaske erzeugt werden.

5. Verfahren nach Anspruch 3, **dadurch gekennzeichnet, dass** die seitlichen Abmessungen der partiellen Beschichtung (23,24,26,27) durch Laserstrahlung definiert werden.

6. Verfahren nach einem der Ansprüche 3 bis 5, **dadurch gekennzeichnet, dass** ein Fotoresist vorkonfektioniert wird, um eine Zielgeometrie zu erzeugen.

7. Verfahren nach Anspruch 6, **dadurch gekennzeichnet, dass** der vorkonfektionierte Fotoresist auf die Dichtfläche aufgebracht wird.

8. Verfahren nach Anspruch 7, **dadurch gekennzeichnet, dass** der auf die Dichtfläche aufgebrachte Fotoresist fotostrukturiert wird, um die seitlichen Abmessungen der partiellen Beschichtung (23,24,26,27) zu definieren.

9. Verfahren nach einem der Ansprüche 3 bis 8, **dadurch gekennzeichnet, dass** die Funktion einer durch die partielle Beschichtung gebildeten Dichtung durch Material und Form der partiellen Beschichtung eingestellt wird.

## Claims

1. High-pressure connection with two sealing faces (8) bearing one against the other, at least one of the sealing faces (8) being provided with a partial coating (23, 24, 26, 27), **characterized in that** the partial coating (23, 24, 26, 27) contains a plurality of different materials.

2. High-pressure connection according to Claim 1, **characterized in that** the different materials are applied one above the other and/or next to one another.

3. Method for producing a high-pressure connection with two sealing faces (8) bearing one against the other according to one of the preceding claims, **characterized in that** the partial coating (23, 24, 26, 27) is generated by means of electrochemical metal deposition.

4. Method according to Claim 3, **characterized in that** the lateral dimensions of the partial coating (23, 24, 26, 27) are generated by means of photolithography, using a photomask.

5. Method according to Claim 3, **characterized in that** the lateral dimensions of the partial coating (23, 24, 26, 27) are defined by means of laser radiation.

6. Method according to one of Claims 3 to 5, **characterized in that** a photoresist is prefabricated in order to generate a target geometry.

7. Method according to Claim 6, **characterized in that** the prefabricated photoresist is applied to the sealing face.

8. Method according to Claim 7, **characterized in that** the photoresist applied to the sealing face is photostructured, in order to define the lateral dimensions of the partial coating (23, 24, 26, 27).

9. Method according to one of Claims 3 to 8, **characterized in that** the function of a seal formed by the partial coating is set by means of the material and form of the partial coating.

## Revendications

1. Connexion haute pression comprenant deux surfaces d'étanchéité (8) s'appliquant l'une contre l'autre, au moins l'une des surfaces d'étanchéité (8) étant pourvue d'un revêtement partiel (23, 24, 26, 27), **caractérisée en ce que** le revêtement partiel (23, 24, 26, 27) contient plusieurs matériaux différents.

2. Connexion haute pression selon la revendication 1, **caractérisée en ce que** les différents matériaux sont appliqués l'un au-dessus de l'autre et/ou l'un à côté de l'autre.

3. Procédé de fabrication d'une connexion haute pression comprenant deux surfaces d'étanchéité (8) s'appliquant l'une contre l'autre selon l'une quelconque des revendications précédentes, **caractérisé en ce que** le revêtement partiel (23, 24, 26, 27) est produit par déposition de métal électrochimique.

4. Procédé selon la revendication 3, **caractérisé en ce que** les dimensions latérales du revêtement partiel (23, 24, 26, 27) sont produites par photolithographie avec un masque photolithographique.

5. Procédé selon la revendication 3, **caractérisé en ce que** les dimensions latérales du revêtement partiel (23, 24, 26, 27) sont produites par faisceau laser.

6. Procédé selon l'une quelconque des revendications 3 à 5, **caractérisé en ce que** l'on confectionne préalablement une photorésine, afin de produire une géométrie souhaitée.

7. Procédé selon la revendication 6, **caractérisé en ce que** la photorésine confectionnée préalablement est appliquée sur la surface d'étanchéité.

8. Procédé selon la revendication 7, **caractérisé en ce que** la photorésine appliquée sur la surface d'étanchéité est photostructurée afin de définir les dimensions latérales du revêtement partiel (23, 24, 26, 27).

9. Procédé selon l'une quelconque des revendications 3 à 8, **caractérisé en ce que** la fonction d'un joint d'étanchéité formé par le revêtement partiel est ajustée par le matériau et la forme du revêtement partiel.
